# EUROPÄISCHE PATENTSCHRIFT

(11) **EP 1 719 934 B1**
(45) Veröffentlichungstag und Bekanntmachung des Hinweises auf die Patenterteilung: **25.06.2014**
(21) Anmeldenummer: 06002326.4
(22) Anmeldetag: 04.02.2006
(51) Int. Cl.: F16H 59/02

(54) **Schaltvorrichtung für ein automatisiertes oder automatisches Getriebe**
Shift device for automated or automatic transmission
Dispositif de changement de vitesses pour transmission automatisée ou automatique

(30) Priorität: 04.05.2005 DE 102005020721
(43) Veröffentlichungstag der Anmeldung: 08.11.2006
(73) Patentinhaber: Dr. Ing. h.c. F. Porsche AG, 70435 Stuttgart (DE)
(72) Erfinder: Sickart, Michael, 71296 Heimsheim (DE); Funk, Michael, 70469 Stuttgart (DE); Baur, Peter, 71297 Mönsheim (DE)

(56) Entgegenhaltungen:
- DE-A1- 10 059 277
- DE-A1- 19 737 296
- DE-A1- 19 849 076

## Beschreibung

Die Erfindung geht aus von einer Schaltvorrichtung für ein automatisiertes oder automatisches Getriebe gemäß den Merkmalen des Oberbegriffs des Patentanspruchs 1.

Aus der DE 37 17 675 C2 ist eine Schaltvorrichtung für ein automatisches Getriebe bekannt, bei der ein Wählhebel über eine Quergasse in zwei Schaltgassen überführbar ist.

In einer ersten Schaltgasse sind die Wählstellungen P, R, N, D, 3, 2, 1 vorwählbar. In der zweiten Schaltgasse sind manuell einzelne Gänge schaltbar.

Ein weiteres Schaltkonzept für ein automatisiertes bzw. automatisches Getriebe ist aus der DE 20 2004 004 151 U1 bekannt. Diese Schaltvorrichtung ist dadurch charakterisiert, dass der Wählhebel für die beiden Schaltgassen lediglich eine stabile Position aufweist, von der aus alle Fahrzustände eingestellt werden können. Nachdem der Getriebegang ausgewählt worden ist, wird der Wählhebel in die einzige stabile Position nach Art eines Joysticks zurückgeführt.

Aus der Gattungsgemäßen DE 197 37 296 A ist eine Schaltvorrichtung bekannt, bei der eine Stellung für das schrittweise manuelle Schalten als stabile Position vorgesehen ist, von der eine Stellung für die Unterbrechung einer Drehmomentübertragung erreichbar ist.

Ausgehend von der aus der DE 37 17 675 C2 bekannten Zwei-Gassen-Schaltung für ein Lastschaltgetriebe ist es Aufgabe der Erfindung, die Funktionalität einer derartigen Schaltvorrichtung zu verbessern, ohne dass die wesentlichen, dem Fahrer bereits aus der täglichen Übung bekannten Schaltabläufe bei Kraftfahrzeugen mit einem automatisierten oder automatischen Getriebe wesentlich verändert werden.

Die Aufgabe wird durch die im Anspruch 1 angegebenen Merkmale gelöst.

Erfindungsgemäß werden die drei stabilen Positionen für die Wahlstufen P, R und N beibehalten, während die automatische Wahlstufe D und der manuelle Modus M über eine vierte stabile Position des Wählhebels auswählbar sind.

Weitere vorteilhafte Ausgestattungen und Weiterbildungen der Schaltvorrichtung sind in den Unteransprüchen angegeben.

Die vierte stabile Position des Wählhebels befindet sich zentral in der zweiten Schaltgasse, von der aus der Wählhebel über die erste Quergasse zu den Positionen für die Wahlstufen P, R, N und D oder über die zweite Quergasse zum manuellen Modus M überführbar ist, wobei nach der Anwahl des manuellen Modus M oder der Wahlstufe D der Wählhebel nach Art eines Joysticks über einen Federmechanismus wieder in die vierte stabile Position zurückkehrt. Damit ist es beispielsweise möglich, bei der eingelegten Wahlstufe D direkt aus dem Automatikmodus in den manuellen Schaltmodus zu wechseln.

In der zweiten Schaltgasse sind im manuellen Modus Einfach- oder Mehrfachschaltungen möglich.

Um dem Fahrer eine eindeutige visuelle Rückmeldung für den eingelegten Fahrgang geben zu können, wird vorgeschlagen, die vier stabilen Positionen beispielsweise im Armaturenbrett über Leuchtdioden und den manuellen Modus M sowie die Wahlstufe D als Digitalanzeige anzuzeigen.

Ein Ausführungsbeispiel der Erfindung ist in den Zeichnungen dargestellt und wird im nachfolgenden näher beschrieben.

Es zeigen:
- Fig. 1: ein Schaltschema für ein Lastschaltgetriebe und
- Fig. 2: eine Anzeigevorrichtung für das in Fig. 1 dargestellte Schaltschema.

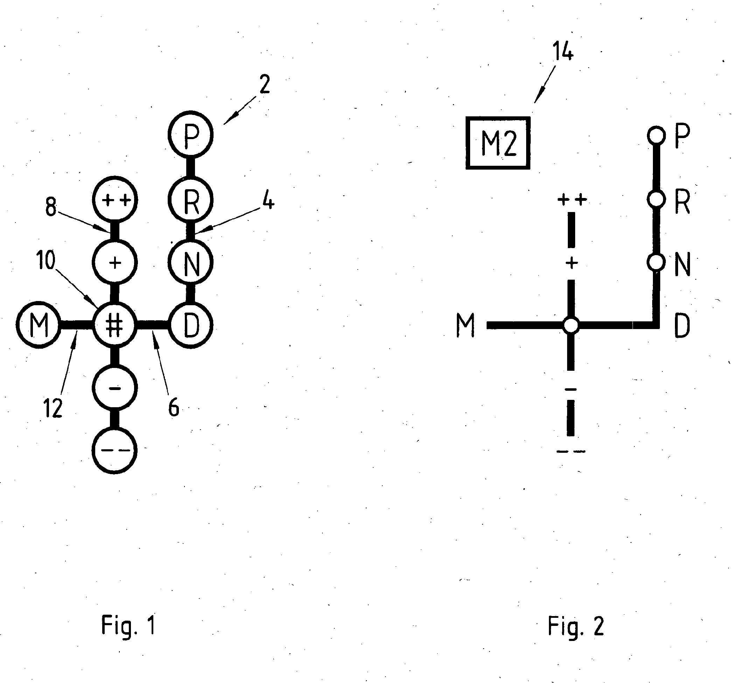

Die in Fig. 1 dargestellte Schaltvorrichtung 2 weist einen nicht dargestellten Wählhebel auf, der in einer ersten Schaltgasse 4 zwischen den automatischen Wahlstufen P, R, N und D verstellbar ist. Über eine erste Quergasse 6 ist der Wählhebel in eine zweite Schaltgasse 8 überführbar. In dieser zweiten Schaltgasse 8 können die Getriebegänge durch einfaches oder mehrfaches Hoch- oder Herunterschalten manuell ausgewählt werden. Dabei wird der Wählhebel über einen Federmechanismus immer in eine vierte stabile Position 10 nach Art eines Joysticks zurückgeführt. Der Wählhebel kann nach Art eines Tipp-Schalters ausgeführt sein, der durch das Antippen vom Fahrer den gewünschten Fahrmodus einstellt und beim Loslassen selbsttätig in die stabile Position 10 zurückkehrt. Beim Antippen des Wählhebels in der zweiten Schaltgasse 8, z.B. in die in Figur 1 dargestellte Plus-Richtung wird um einen oder mehrere Gänge hochgeschaltet. Über eine zweite Quergasse 12 kann zum manuellen Modus M umgeschaltet werden. Damit ist von der stabilen vierten Position 10 aus der Wählhebel entweder über die erste Quergasse 6 direkt zur Wahlstufe D oder über die zweite Quergasse 12 zum manuellen Modus M überführbar. Sowohl die Wahlstufe D als auch der manuelle Modus M sind als instabile Positionen ausgeführt, so dass nach der Anwahl der Wählhebel wieder in seine vierte stabile Position 10 zurückkehrt. Dadurch, dass die Wahlstufe D als auch der manuelle Modus M in den beiden Quergassen 6, 12 Endanschläge bilden, ist für den Fahrer eine eindeutige und problemlose Anwahl dieser beiden Modi möglich. Auch wenn sich das Fahrzeug momentan in der Automatik-Wahlstufe D befindet, ist über die zentrale stabile Position 10 des Wählhebels eine direkte Anwahl der in der zweiten Schaltgasse 8 liegenden Tipp-Positionen (+/-, ++/--) möglich.

Um dem Fahrer eine eindeutige visuelle Rückmeldung für den eingelegten Fahrgang geben zu können, findet das in Fig. 2 dargestellte Anzeigekonzept Anwendung. Dabei werden die vier stabilen Positionen P, R, N und 10 des Wählhebels über Leuchtdioden angezeigt, während der manuelle Modus M (+/, ++/--) sowie die Wahlstufe D als instabile Wählhebelpositionen über eine Digitalanzeige 14 dem Fahrer als Rückmeldung dienen. Der in Fig. 2 dargestellte manuelle Modus M2 sagt dabei aus, dass der zweite Gang des Lastschaltgetriebes eingelegt ist.

## Patentansprüche

1. Schaltvorrichtung für ein automatisiertes oder automatisches Getriebe, mit einem Wählhebel, der in einer ersten Schaltgasse (4) zwischen Automatik-Wahlstufen (P, R, N, D) verstellbar ist, wobei der Wählhebel über eine Quergasse (6) in eine zweite Schaltgasse (8) überführbar ist, um einzelne Getriebegänge manuell auszuwählen, sowie mit einer zweiten Quergasse (12), mit der durch den Wählhebel ein manueller Modus (M) aktivierbar ist, wobei der Wählhebel neben drei stabilen Positionen für die Wahlstufen (P, R und N) eine vierte stabile Position (10) aufweist, von der aus alle Fahrzustände einstellbar sind, **dadurch gekennzeichnet, dass**
um die vierte stabile Position (10) instabile Positionen (D, M, +/-, ++/- -) angeordnet sind, und
sowohl die Wahlstufe (D) als auch der manuelle Modus (M) als instabile Positionen ausgeführt sind, wobei
sich die vierte stabile Position (10) zentral in der zweiten Schaltgasse (8) befindet, von der aus der Wählhebel über die erste Quergasse (6) zu den Positionen für die Wahlstufen (P, R, N und D) oder über die zweite Quergasse (12) zum manuellen Modus M (+/, ++/- - ) überführbar ist, wobei nach der Anwahl des manuellen Modus M (+/-, ++/- -) und der Wahlstufe (D) der Wählhebel wieder in seine vierte stabile Position (10) zurückgeführt wird.

2. Schaltvorrichtung nach Anspruch 1, **dadurch gekennzeichnet, dass** in der zweiten Schaltgasse (8) Einfach- (+/-) oder Mehrfachschaitungen (++/- -) möglich sind.

3. Schaltvorrichtung nach Anspruch 1 oder 2, **dadurch gekennzeichnet, dass** als visuelle Rückmeldung für den eingelegten Fahrgang für die vier stabilen Positionen (P, R, N und 10) Leuchtdioden und für den manuellen Modus M (+/-, ++/ - - ) sowie die Wahlstufe (D) eine Digitalanzeige (14) Verwendung finden.

## Claims

1. Shift device for an automated or automatic transmission, having a selector lever which is adjustable in a first shift slot (4) between automatic selector stages (P, R, N, D), wherein the selector lever can be transferred via a transverse slot (6) into a second shift slot (8) in order for individual transmission gears to be selected manually, and having a second transverse slot (12) via which, by means of the selector lever, a manual mode (M) can be activated, wherein the selector lever has, in addition to three stable positions for the selector stages (P, R and N), a fourth stable position (10) proceeding from which all driving states can be set,
**characterized in that**,
unstable positions (D, M, +/-, ++/--) are arranged around the fourth stable position (10), and
both the selector stage (D) and also the manual mode (M) are configured as unstable positions, wherein
the fourth stable position (10) is situated centrally in the second shift slot (8), proceeding from which the selector lever can be transferred via the first transverse slot (6) to the positions for the selector stages (P, R, N and D) or via the second transverse slot (12) to the manual mode M (+/-, ++/--), wherein after the selection of the manual mode M (+/-, ++/--) and of the selector stage (D), the selector lever is returned into its fourth stable position (10).

2. Shift device according to Claim 1, **characterized in that**, in the second shift slot (8), single shifts (+/-) or multiple shifts (++/--) are possible.

3. Shift device according to Claim 1 or 2, **characterized in that** light-emitting diodes are used as visual feedback for the engaged driving gear for the four stable positions (P, R, N and 10), and a digital display (14) is used as visual feedback for the manual mode M (+/-, ++/--) and the selector stage (D).

## Revendications

1. Dispositif de changement de vitesses pour une transmission automatisée ou automatique, comprenant un levier de sélection qui peut être réglé dans une première voie de changement de vitesses (4) entre des rapports de changement de vitesses automatique (P, R, N, D), le levier de sélection pouvant être transféré par le biais d'une voie transversale (6) dans une deuxième voie de changement de vitesses (8) afin de sélectionner manuellement des rapports de changement de vitesses individuels, et comprenant une deuxième voie transversale (12) avec laquelle un mode manuel (M) peut être activé par le levier de sélection, le levier de sélection présentant, en plus des trois positions stables pour les rapports de changement de vitesses (P, R et N), une quatrième position stable (10) à partir de laquelle tous les états de conduites peuvent être ajustés,
**caractérisé en ce que**
des positions instables (D, M, +/-, ++/--) sont disposées autour de la quatrième position stable (10), et
le rapport de changement de vitesses (D) ainsi que le mode manuel (M) sont réalisés en tant que positions instables,
la quatrième position stable (10) se trouvant centralement dans la deuxième voie de changement de vitesses (8), depuis laquelle le levier de sélection peut être transféré par le biais de la première voie transversale (6) dans les positions pour les rapports de changement de vitesses (P, R, N et D) ou par le biais de la deuxième voie transversale (12) dans le mode manuel M (+/-, ++/- -), après le choix du mode manuel M (+/-, ++/--) et du rapport de changement de vitesses (D), le levier de sélection étant à nouveau ramené dans sa quatrième position stable (10).

2. Dispositif de changement de vitesses selon la revendication 1, **caractérisé en ce que** dans la deuxième voie de changement de vitesses (8) peuvent être effectués des changements de vitesses simples (+/-) ou des changements de vitesses multiples (++/--).

3. Dispositif de changement de vitesses selon la revendication 1 ou 2, **caractérisé en ce que** l'on utilise en tant qu'information visuelle en retour pour le rapport de marche enclenché pour les quatre positions stables (P, R, N et 10) des diodes électroluminescentes et pour le mode manuel M (+/-, ++/--), ainsi que pour le rapport de changement de vitesses (D), un affichage numérique (14).
